# EUROPEAN PATENT SPECIFICATION

(11) **EP 2 661 056 B1**
(45) Date of publication and mention of the grant of the patent: **08.01.2020**
(21) Application number: 11852699.5
(22) Date of filing: 12.10.2011
(51) Int. Cl.: H04B 5/00, H04B 5/06, H01Q 7/00, H01Q 1/22

(54) **NEAR FIELD COMMUNICATION ELECTRONIC DEVICE**
NAHFELDKOMMUNIKATIONSFÄHIGE ELEKTRONISCHE VORRICHTUNG
DISPOSITIF ÉLECTRONIQUE DE COMMUNICATION EN CHAMP PROCHE

(30) Priority: 31.12.2010 CN 201010619744
(43) Date of publication of application: 06.11.2013
(73) Proprietor: Huizhou TCL Mobile Communication Co., Ltd, Zhongkai Hi-Tech Development District Huizhou Guangdong 516000 (CN)
(72) Inventor: LUO, Minli, Guangdong 516006 (CN); ZHANG, Lian, Guangdong 516006 (CN)
(74) Representative: Brachmann, Roland W.
(86) International application number: PCT/CN2011/080717
(87) International publication number: WO 2012/088945

(56) References cited:
- CN-A- 102 122 753
- CN-U- 201 585 021
- US-A1- 2007 232 371
- US-A1- 2009 312 069
- US-A1- 2010 093 390
- US-A1- 2010 194 334

## Description

The present invention relates to the field of near field communication, and in particular to a near field communication electronic device and antenna thereof.

Near field communication (NFC) is developed by integrating non-contact radio frequency identification (RFID) and interconnection technologies, and the RF communication works at 13.56 MHZ in said communication technologies. One of the NFC technologies is to combine a sensing card reader, a sensing card and point to point functions onto an single chip, which can identify compatible apparatuses within a short range and exchange data therewith. The NFC transmission range is shorter than that of RFID, which could reach several meters or even dozens of meters. Since NFC adopts unique signal decay technologies, however, it has features of near distance, high bandwidth and low energy consumption relative to RFID. Therefore, NFC technologies act in a distance of 10 to 20 cm with a data transmission rate at 106, 212 or 424 kbps, which is faster, more reliable and simpler than infrared transmission and safer than Bluetooth.

NFC technologies are applied more on production, logistics, tracking and asset management, which mainly include fields of access control, public transportation, cell phone payment, electronic notes, peer communications, mobile information access, reader and writer terminals for non-contact smart cards, and smart cards. Through an internal NFC chip, a cell phone may function as a RFID network module to make payments, or function as a RFID reader and writer for data exchange and collection. As a result, people can make payments, acquire information and have other services at any location and any time through any apparatuses.

The performance of the NFC antenna in a NFC electronic terminal determines the NFC range and the performance of the entire NFC electronic terminal. Since the operation frequency band of NFC is 13.56 MHZ, NFC antennas typically have a large size. Current NFC antennas on cell phones typically use a flexible PCB as the antenna body, which is pasted to the back cover of the cell phone battery and connected to the main board by means of a metal spring plate or pins.

First, with such a connection method, the contact is easy to get loose after repeated plugging and unplugging of the battery cover, which affects the performance of the NFC antenna and further affects the performance of the cell phone.

Since the antenna is disposed on the back cover of the cell phone, moreover, it functions normally only when the back of the cell phone faces other NFC apparatuses due to the shielding effect of the battery, leading to inconvenient operations.

Lastly, since the cell phone thickness is increased by at least 0.5 mm by pasting NFC onto the back cover of the cell phone battery, it is difficult to make a cell phone thin and light, which goes against the current trend of increasingly thin cell phones.

US 2010/0093390 A1 discloses a portable wireless device that includes: a body; a first communication unit that includes a loop antenna disposed in the body, and communicates with external devices using a first usable frequency band, and an RFID chip that performs predetermined processing with respect to information communicated by the loop antenna; and a second communication unit that includes a main antenna disposed in the body, and communicates by a second usable frequency band that is higher than the first usable frequency band, and a communication processing unit that performs predetermined processing with respect to information communicated by the main antenna, in which the loop antenna and the main antenna are disposed such that interference therebetween occurs, and a high-order secondary resonance point of the first usable frequency band generated due to resonance of the loop antenna is adjusted not to overlap the second usable frequency band.

US 2007/0232371 A1 discloses a radio communication apparatus includes a housing; a battery for driving the radio communication apparatus; an antenna provided in the housing and arranged around the battery; and a magnetic sheet arranged around the battery.

US 2009/0312069 A1 discloses a portable electronic device with broadcast antenna at least including a main body having a battery accommodating space; a cover having a battery area corresponding to the battery accommodating space of the main body, wherein the shape and size of the cover are adapted to cover the battery accommodating space and the cover is separablely assembled with the corresponding outer edge of the battery accommodating space of the main body; and a broadcast antenna, disposed on the inner surface of the cover other than the battery area for unidirectionally receiving broadcasting signals in a first frequency band.

US 2010/0194334 A1 discloses existing electronic devices that are being retrofitted for wireless power transfer and near-field communication. Retrofitting circuitry includes an antenna for receiving a signal from an external source, and conversion circuitry for converting the signal to be used by an electronic device. The antenna and conversion circuitry are configured to retrofit to the electronic device, where the electronic device did not originally include the antenna or conversion circuitry. The antenna and conversion circuitry may be configured to receive and convert the signal to generate wireless power for the electronic device. The antenna and the conversion cir-cuitry may also be configured to enable the electronic device to send and receive near-field communication data.

The present invention is defined by a NFC electronic device according to independent claim 1.

According to a preferred embodiment of the present invention, said antenna module comprises a flexible PCB, said flexible PCB being disposed on a sidewall of said frame.

According to a preferred embodiment of the present invention, said antenna module comprises an electrically conductive coating, said electrically conductive coating being disposed around the battery-receiving groove.

According to a preferred embodiment of the present invention, the side frame is sidewalls of said battery-receiving groove.

According to a preferred embodiment of the present invention, the side frame is a circular side wall fitted over the outside of said battery-receiving groove.

According to a preferred embodiment of the present invention, said NFC control module comprises a NFC processing chip and an antenna matching network circuit, said NFC processing chip is correspondingly electrically connected to said antenna matching network circuit, and said antenna matching network circuit is correspondingly electrically connected to said antenna module.

According to a preferred embodiment of the present invention, said NFC electronic device is a cell phone. According to a preferred embodiment of the present invention, said NFC electronic device is a portable multimedia terminal.

When said NFC electronic device is working, consequently, signals of said antenna module are not shielded by the battery of said NFC electronic device, the signal transmission performance is excellent, and the device can be used in a plurality of directions, leading to convenient operations. The NFC electronic device according to the present invention has the advantages of excellent signal transmission performance and convenient operations.

The aforementioned characteristics, features and advantages of the invention as well as the way they are achieved will be further illustrated in connection with the following examples and considerations as discussed in view of the figures.
- Fig.1: illustrates the structure of the first embodiment of the NFC electronic device according to the present invention.
- Fig.2: illustrates the structure of a further example of the NFC electronic device.

The present invention will be described below with reference to the accompanying drawings.

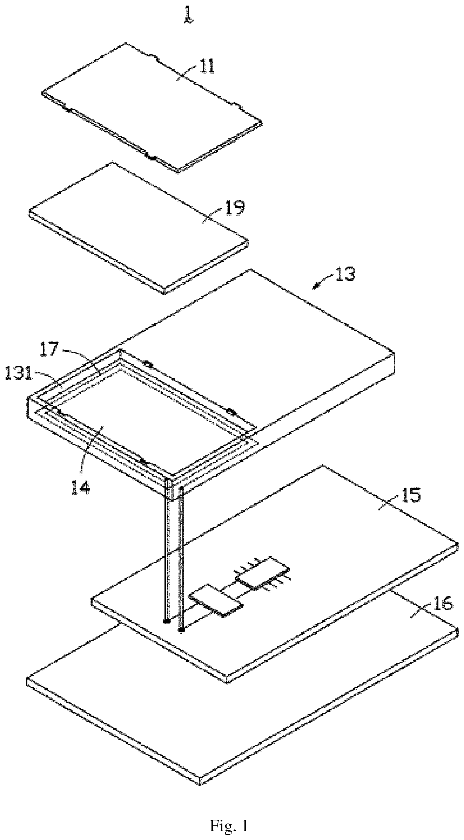

**Fig.1** illustrates the structure of the first embodiment of the NFC electronic device according to the present invention.

In the NFC electronic device 1 in the first embodiment of the present invention, said NFC electronic device 1 comprises an antenna module 17, a NFC control module (not shown) and a battery-receiving groove 14, the antenna module 17 being disposed around the battery-receiving groove 14. Signals of the antenna module 17 of said NFC electronic device 1 of such a design are not shielded by components in said battery-receiving groove, such as the battery, the signal transmission performance is excellent, and the device can be used in a plurality of directions, leading to convenient operations.

In another embodiment, said NFC electronic device 1 comprises a back shell 11, a rear shell 13, a front shell 16, a circuit board 15 that comprises said NFC control module, and a battery 19.

Said front shell 16, said rear shell 13 and said back shell 11 are disposed sequentially from front to back on said NFC electronic device. Said circuit board 15 is disposed between said front shell 16 and said rear shell 13, the side edges of said rear shell 13 (not labeled) are disposed around the battery-receiving groove 14, and said battery 19 is received inside said battery-receiving groove 14. Said antenna module 17 is correspondingly electrically connected to the NFC control module, and said antenna module 17 is disposed on the side edges of said rear shell 13.

Said back shell 11 is typically made of plastics, which is connected to said rear shell 13 by means of locking, buckling, etc. to cover and secure said battery inside said battery-receiving groove 14, said back shell 11 usually abuts closely against said battery 19 to prevent said battery 19 from shaking and affecting the use of said NFC electronic device 1.

Said rear shell 13 is typically made of plastics or a combination of plastics and metals. The shape of said rear shell 13 is configured corresponding to the profile of said NFC electronic device 1. In this embodiment, it is configured to be a rectangular structure corresponding to the profile of said NFC electronic device 1, which is used to engage with the front shell 16 of said NFC electronic device 1 to secure said circuit board 15 and other components, such as a loudspeaker (not shown) and a microphone (not shown). Said rear shell 13 is disposed between said circuit board 15 and said back shell 11. Said battery-receiving groove is disposed on the side of said rear shell 13 that is away from said circuit board 15, said battery-receiving groove is configured corresponding to the external profile of said battery 19, and said battery-receiving groove receives said battery 19. Said back shell 11 is connected to said rear shell 13 by means of locking, buckling, etc. to cover said battery-receiving groove and secure said battery 19 inside said battery-receiving groove. The side edges of said rear shell 13 comprises a side frame 131, said side frame 131 is disposed around the battery-receiving groove, said side frame 131 may be sidewalls of said battery-receiving groove, or a circular side wall fitted over the outside of said battery-receiving groove. In the present embodiment, said side frame 131 is configured to be sidewalls of said battery-receiving groove. Said antenna module 17 is disposed on said side frame 131. Said antenna module 17 is correspondingly electrically connected to the NFC control module.

Said front shell 16 is disposed on the front surface of said NFC electronic device 1, said front shell 16 engages with said rear shell 13 to secure said circuit board 15, said front shell 16 and said circuit board 15 are connected by means of a fastening piece (not shown), and said front shell 16 may be disposed with components such as a LCD (not shown) and buttons (not shown).

Said circuit board 15 is typically made by laying electronic components on a multi-layer or single-layer hard PCB. Of course, said circuit board 15 may also be made by laying electronic components on a single-layer or multi-layer flexible PCB. Said circuit board 15 is electrically connected to said antenna module 17. Said circuit board 15 comprises said NFC control module, said NFC control module comprises a NFC processing chip (not shown) and an antenna matching network circuit (not shown), said NFC processing chip is electrically connected to said antenna matching network circuit, and said antenna matching network circuit is correspondingly electrically connected to said antenna module 17. Said circuit board 15 further comprises a power supply port (not shown), said power supply port is electrically connected to a conductive contact (not shown) inside the battery-receiving groove 14, and said conductive contact is correspondingly electrically connected to said battery 19 to supply power from said battery 19 to said NFC electronic device 1.

Said antenna module 17 comprises a flexible PCB (not shown), said flexible PCB may have a single layer or multiple layers, and said flexible PCB is made into multiple layers in the present embodiment. The specific way to make said flexible PCB is that lines of an electrically conductive substance (not labeled) are printed on multiple layers of a flexible material, said lines of the electrically conductive substance are correspondingly electrically connected between each layer of the flexible material. Said lines of the electrically conductive substance are made of an electrically conductive material with low electric resistivity, which is typically silver, copper, or an alloy thereof. Said flexible PCB may be disposed on the sidewall of said side frame 131 of said rear shell 13 by means of pasting or buckling. Said flexible PCB is correspondingly electrically connected to said NFC control module of said circuit board 15. Specifically, said flexible PCB is correspondingly electrically connected to said antenna matching network circuit by means of a spring plate or pins. Of course, said antenna module 17 may also be formed by coating an electrically conductive coating on said side frame 131 and correspondingly, said electrically conductive coating is correspondingly electrically connected to said antenna matching network circuit.

Compared with the prior art, in the NFC electronic device 1 according to the present invention, the signal transmission antenna of said NFC electronic device 1 is formed by disposing said flexible PCB comprising lines of the electrically conductive substance or said electrically conductive coating on said side frame 131 of said rear shell 13, and said flexible PCB or said electrically conductive coating is correspondingly electrically connected to said antenna matching network circuit. Since said antenna module 17 of said NFC electronic device 1 is disposed on said side frame 131 of said rear shell 13, it is not shielded by said battery 19 and signals of said antenna module 17 can be transmitted without passing through the battery. As a result, said antenna module 17 has excellent signal transmission performance and can transmit signals in a plurality of directions, leading to convenient operations. Since said flexible PCB or said electrically conductive coating of said antenna module 17 is disposed on the side frame 131, said NFC electronic device 1 is easy to become light and thin and has good use performance.

Said NFC electronic device 1 according to the present invention may be a cell phone or a portable multimedia terminal with NFC capabilities.

Therefore, said NFC electronic device 1 according to the present invention is characterized by excellent signal transmission performance, easy implementation of lightness and thinness, convenient use and excellent operational performance.

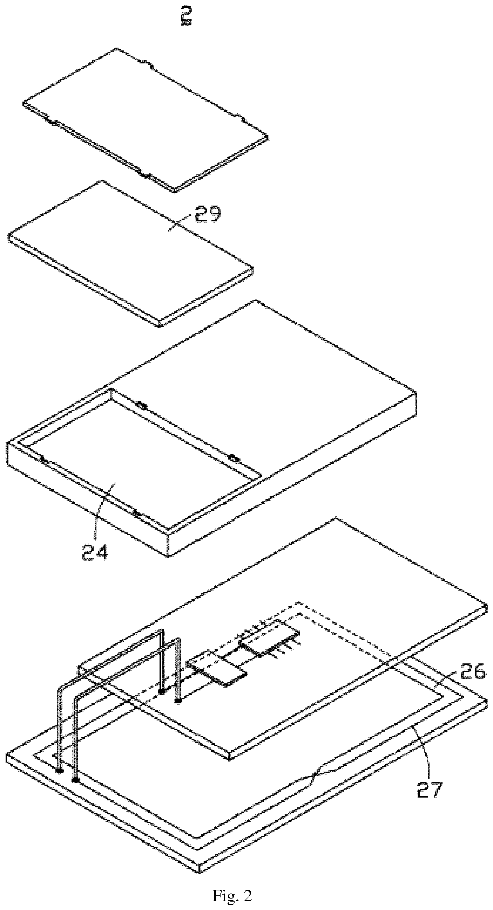

Please refer to **Fig.2.** Fig.2 illustrates the structure of a further example of the NFC electronic device which does not fall under the scope of the present invention. The second example of the NFC electronic device is substantially the same as the first embodiment with the main difference in that in the present example said antenna module 27 is disposed on the side edge (or edges) of said front shell 26. Said antenna module 27 comprises a flexible PCB (not shown). Said flexible PCB is disposed on the side edge (or edges) of said front shell 26, and said flexible PCB is correspondingly electrically connected to said antenna matching network circuit (not shown) by means of a spring plate or pins. Of course, said antenna module 27 may also be disposed as an electrically conductive coating (not shown), and said electrically conductive coating is correspondingly electrically connected to said antenna matching network circuit.

In the present example, said antenna module 27 is disposed on the side edge (or edges) of said front shell 26, said side edge is disposed around the battery-receiving groove 24, said antenna module 27 is not shielded by said battery 29 and can transmit signals in a plurality of directions, and the signal transmission performance is excellent. Said antenna module 27 comprises a flexible PCB or an electrically conductive coating, said antenna module 27 can make the thickness of said NFC electronic device 2 thinner, and said NFC electronic device 2 is easy to become light and thin and has convenient use.

Similarly, therefore, said NFC electronic device 2 is characterized by excellent signal transmission performance, easy implementation of lightness and thinness, convenient use and excellent operational performance.

Only embodiments of the present invention are described above, which do not restrict the patent scope of the present invention as defined by the appended claims.

## Claims

1. A NFC electronic device (1), which comprises an antenna module (17), a NFC control module and a battery-receiving groove (14), the antenna module is correspondingly electrically connected to the NFC control module, wherein the antenna module is disposed around the battery-receiving groove, wherein said NFC electronic device comprises a front shell (16), a rear shell (13) connecting with the front shell and disposed with said battery-receiving groove, and a back shell (11) for covering said battery-receiving groove, wherein said rear shell is disposed between said front shell and said back shell, and both the side edges of said front shell and the side edges of said rear shell are disposed around the battery-receiving groove, wherein the side edges of said rear shell comprises a side frame (131), said side frame is disposed around the battery-receiving groove, and wherein said antenna module is disposed on said side frame.

2. The NFC electronic device as set forth in claim 1, wherein the side frame is sidewalls of said battery-receiving groove.

3. The NFC electronic device as set forth in claim 1, wherein the side frame is a circular side wall fitted over the outside of said battery-receiving groove.

4. The NFC electronic device according to any of the preceding claims, wherein said antenna module comprises a flexible PCB, said flexible PCB being disposed on a sidewall of said side frame.

5. The NFC electronic device according to any of claims 1-3, wherein said antenna module comprises an electrically conductive coating, said electrically conductive coating being disposed around the battery-receiving groove.

6. The NFC electronic device according to any of the preceding claims, wherein said NFC control module comprises a NFC processing chip and an antenna matching network circuit, said NFC processing chip is correspondingly electrically connected to said antenna matching network circuit, and said antenna matching network circuit is correspondingly electrically connected to said antenna module.

7. The NFC electronic device according to any of the preceding claims, wherein said NFC electronic device is a cell phone.

8. The NFC electronic device according to any of claims 1 to 6, wherein said NFC electronic device is a portable multimedia terminal.

## Patentansprüche

1. Elektronisches NFC-Gerät (1), aufweisend ein Antennenmodul (17), ein NFC-Steuermodul und eine Batterieaufnahmenut (14), wobei das Antennenmodul entsprechend mit dem NFC-Steuermodul elektrisch verbunden ist, wobei das Antennenmodul um die Batterieaufnahmenut herum angeordnet ist, wobei das elektronische NFC-Gerät eine vordere Schale (16), eine hintere Schale (13), die mit der vorderen Schale verbunden und mit der Batterieaufnahmenut angeordnet ist, und eine rückwärtige Schale (11) zum Abdecken der Batterieaufnahmenut aufweist wobei die hintere Schale zwischen der vorderen Schale und der rückwärtigen Schale angeordnet ist und sowohl die Seitenkanten der vorderen Schale als auch die Seitenkanten der hinteren Schale um die Batterieaufnahmenut herum angeordnet sind, wobei die Seitenkanten der hinteren Schale einen Seitenrahmen (131) aufweisen, welcher Seitenrahmen um die Batterieaufnahmenut herum angeordnet ist und wobei das Antennenmodul auf dem Seitenrahmen angeordnet ist.

2. Elektronisches NFC-Gerät nach Anspruch 1, wobei der Seitenrahmen aus Seitenwänden der Batterieaufnahmenut besteht.

3. Elektronisches NFC-Gerät nach Anspruch 1, wobei der Seitenrahmen eine kreisförmige Seitenwand ist, die über die Außenseite der Batterieaufnahmenut gesetzt ist.

4. Elektronisches NFC-Gerät nach einem der vorhergehenden Ansprüche, wobei das Antennenmodul eine flexible Leiterplatte aufweist, die an einer Seitenwand des Seitenrahmens angeordnet ist.

5. Elektronisches NFC-Gerät nach einem der Ansprüche 1 bis 3, wobei das Antennenmodul eine elektrisch leitfähige Beschichtung umfasst, die um die Batterieaufnahmenut herum angeordnet ist.

6. Elektronisches NFC-Gerät nach einem der vorhergehenden Ansprüche, wobei das NFC-Steuermodul einen NFC-Verarbeitungschip und eine Antennenanpassungsnetzwerkschaltung umfasst, wobei der NFC-Verarbeitungschip mit der Antennenanpassungsnetzwerkschaltung entsprechend elektrisch verbunden ist und die Antennenanpassungsnetzwerkschaltung mit dem Antennenmodul entsprechend elektrisch verbunden ist.

7. Elektronisches NFC-Gerät nach einem der vorhergehenden Ansprüche, wobei das elektronische NFC-Gerät ein Mobiltelefon ist.

8. Elektronisches NFC-Gerät nach einem der Ansprüche 1 bis 6, wobei das elektronische NFC-Gerät ein tragbares Multimedia-Endgerät ist.

## Revendications

1. Dispositif électronique NFC (1), qui comprend un module d'antenne (17), un module de commande NFC et une encoche de réception de batterie (14), le module d'antenne étant respectivement relié électriquement au module de commande NFC, le module d'antenne étant disposé autour de l'encoche de réception de batterie, ledit dispositif électronique NFC comprenant une coque avant (16), une coque arrière (13) se raccordant à la coque avant et disposée avec l'encoche de réception de batterie, et une coque de dos (11) destinée à recouvrir ladite encoche de réception de batterie, ladite coque arrière étant disposée entre ladite coque avant et ladite coque de dos, et à la fois les bords latéraux de ladite coque avant et les bords latéraux de ladite coque arrière étant disposés autour de l'encoche de réception de batterie, les bords latéraux de ladite coque arrière comprenant un cadre latéral (131), ledit cadre latéral étant disposé autour de l'encoche de réception de batterie, et ledit module d'antenne étant disposé sur ledit cadre latéral.

2. Dispositif électronique NFC selon la revendication 1, dans lequel le cadre latéral consiste en des parois latérales de ladite encoche de réception de batterie.

3. Dispositif électronique NFC selon la revendication 1, dans lequel le cadre latéral est une paroi latérale circulaire installée sur l'extérieur de ladite encoche de réception de batterie.

4. Dispositif électronique NFC selon l'une quelconque des revendications précédentes, dans lequel ledit module d'antenne comprend un PCB souple, ledit PCB souple étant disposé sur une paroi latérale dudit cadre latéral.

5. Dispositif électronique NFC selon l'une quelconque des revendications 1 à 3, dans lequel ledit module d'antenne comprend un revêtement électriquement conducteur, ledit revêtement électriquement conducteur étant disposé autour de l'encoche de réception de batterie.

6. Dispositif électronique NFC selon l'une quelconque des revendications précédentes, dans lequel ledit module de commande NFC comprend une puce de traitement NFC et un circuit de réseau d'adaptation d'antenne, ladite puce de traitement NFC est respectivement reliée électriquement audit circuit de réseau d'adaptation d'antenne, et ledit circuit de réseau d'adaptation d'antenne est respectivement relié électriquement audit module d'antenne.

7. Dispositif électronique NFC selon l'une quelconque des revendications précédentes, ledit dispositif électronique NFC étant un téléphone cellulaire.

8. Dispositif électronique NFC selon l'une quelconque des revendications 1 à 6, ledit dispositif électronique NFC étant un terminal multimédia portable.
